# EUROPÄISCHE PATENTSCHRIFT

(11) **EP 1 301 000 B1**
(45) Veröffentlichungstag und Bekanntmachung des Hinweises auf die Patenterteilung: **21.12.2005**
(21) Anmeldenummer: 01123334.3
(22) Anmeldetag: 08.10.2001
(51) Int. Cl.: H04L 25/14

(54) **Kanalzuweisung von Kontrolldaten und Nutzdaten in drahtlosen Kommunikationssystemen**
Channel allocation of control and payload data in wireless communication systems
Allocation des canaux des données de contrôle et de données utiles dans des systèmes de communication sans fil

(43) Veröffentlichungstag der Anmeldung: 09.04.2003
(73) Patentinhaber: SIEMENS AKTIENGESELLSCHAFT, 80333 München (DE)
(72) Erfinder: Beckmann, Mark, 38102 Braunschweig (DE); Eckert, Michael, 38122 Braunschweig (DE); Hans, Martin, 31141 Hildesheim (DE); Otte, Andreas, 29227 Celle (DE)

(56) Entgegenhaltungen:
- WO-A-01/30039
- US-A- 6 094 575
- TUYET TRANG LAM ET AL: "A perceptually-tuned image coder with Channel-Optimized Trellis-Coded Quantization" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24. Oktober 1999 (1999-10-24), Seiten 421-425, XP010369148 ISBN: 0-7803-5467-2
- VU K V ET AL: "Blocking probabilities for inverse multiplexer in public switched digital networks" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13. November 1995 (1995-11-13), Seiten 833-837, XP010164485 ISBN: 0-7803-2509-5
- JEONG G ET AL: "LONG-DISTANCE PARALLEL DATA LINK USING WDM TRANSMISSION WITH BIT- SKEW COMPENSATION" JOURNAL OF LIGHTWAVE TECHNOLOGY, IEEE. NEW YORK, US, Bd. 14, Nr. 5, 1. Mai 1996 (1996-05-01), Seiten 655-660, XP000598716 ISSN: 0733-8724

## Beschreibung

Die Erfindung bezieht sich auf eine Kommunikationsvorrichtung mit einer Sendeeinrichtung, wie einem mobilen Endgerät (UE), und einer Empfangseinrichtung, wie einer Netzwerksteuereinrichtung (RNC), die über Kanäle eines Mobilkommunikationsnetzes miteinander verknüpft sind, zur Übertragung von Datenpaketen zwischen der Sendeeinrichtung und der Empfangseinrichtung, die einen Kontrolldatenteil und einen Nutzdatenteil umfassen und ein mit der Kommunikationsvorrichtung durchführbares Verfahren zur Übertragung eines Datenpakets.

Eine solche bekannte Vorrichtung wird beispielsweise von einem Mobilkommunikations-Netzwerk bereit gestellt, bei dem Datenpakete zwischen einem mobilen Endgerät und einem Knoten des Mobilkommunikations-Netzwerkes übertragen werden.

Die übertragenen Datenpakete umfassen einen Kontrolldatenteil und einen Nutzdatenteil. Der Aufbau eines solchen Datenpakets wird nachfolgend anhand des Beispiels einer Übertragung des Datenpakets von einem mobilen Endgerät (UE) zu einem Knoten des Mobilkommunikations-Netzwerks (Radio Network Controller, RNC) beschrieben:

Bei dem Beispiel wird davon ausgegangen, daß die UMTS-Protokollarchitektur sowohl im mobilen Endgerät (UE) als auch in dem Knoten des Mobilkommunikations-Netzwerks (RNC) vorliegt. Die UMTS-Protokollarchitektur der hier relevanten Schichten 2 und 3 wird beispielsweise in dem Dokument "3G TS 25.301, UMTS Protocol Architecture, 3 GPP, März 2000" beschrieben.

In dem mobilen Endgerät können Daten von verschiedenen Applikationen erzeugt werden. Für die Übertragung von Sprache erzeugt beispielsweise ein Sprach-Coder einen oder mehrere Sprach-Datenströme oder ein HTML-Browser erzeugt unregelmäßige Paket-Datenströme. Diese Daten, bei denen es sich um Nutzdaten handelt, werden zunächst eventuell von Protokollen höherer Schichten modifiziert und für die Datenübertragung in dem Mobilkommunikations-Netzwerk vorbereitet. In diesem Zusammenhang können das User-Datagramm-Prokoll (UDP) und das Internet-Protokoll (IP) zum Einsatz kommen. Für die Übertragung über die UMTS-Luftschnittstelle müssen diese Nutzdaten in den verschiedenen Protokollen der Schicht 2 der UMTS-Protokollarchitektur optimiert werden.

Es besteht auch die Möglichkeit, daß nicht-UMTS-spezifische Protokolle die UMTS-Luftschnittstelle nutzen. Der zugehörige Dienstzugangspunkt innerhalb der UMTS-Protokollarchitektur wird Radio Bearer (RB) genannt. Der RB-Dienstzugangspunkt wird folglich oberhalb der Schicht 2 angeboten und überträgt Nutzdaten transparent von dem mobilen Endgerät über die UMTS-Luftschnittstelle zu dem Knoten des Mobilkommunikations-Netzwerks und umgekehrt. Für eine Datenübertragung wird beim Aufbau eines solchen RB-Dienstzugangspunktes eine bestimmte Übertragungsdienstgüte (Quality of Service, QoS) festgelegt, die sich beispielsweise durch eine bestimmte, garantierte Datenrate, eine maximale Übertragungsverzögerung und/oder eine maximale Bit-Fehlerrate auszeichnet.

Bei der Vorbereitung und Optimierung der Nutzdaten, beispielsweise Sprach-Datenströme, werden verschiedene paketvermittlungsspezifische Protokolle, wie IP, TCP, UDP, usw., abgearbeitet, wobei dem Nutzdatenteil Kontrolldaten vorangestellt werden, die für das Routing und den sog. Session-Aufbau in IP-basierten Netzen notwendig sind. Diese Kontrolldaten sind für die Übertragung eines Datenpaktes über die Luftschnittstelle des Mobilkommunikations-Netzwerks nicht nötig. Für eine effiziente Übertragung eines Datenpakets werden daher die Kontrolldaten komprimiert. Dies findet unter Ausführung geeigneter Algorithmen in der PDCP-Schicht der UMTS-Protokollarchitektur, dort Schicht 2, statt.

Die Datenpakete mit komprimiertem Kontrolldatenteil werden der RLC-Schicht der UMTS-Protokollarchitektur zur weiteren Bearbeitung übergeben. Die RLC-Schicht kommt dann zum Einsatz, wenn die von der PDCP-Schicht kommenden Datenpakete, die in beliebiger Länge vorliegen können, hinsichtlich ihrer Länge für die Luftschnittstelle zur optimieren sind. Eine weitere Funktion der RLC-Schicht besteht in der Vornahme einer Fehlerkorrektur. Ist weder eine Optimierung der Länge der Datenpakete noch eine Fehlerkorrektur erforderlich, kann die RLC-Schicht inm sog. Transparent Mode betrieben werden. Jedem RB-Dienstzugangspunkt ist eine RLC-Schicht zugeordnet, die auch zur Zwischenspeicherung der an einem RB-Dienstzugangspunkt anliegenden Daten verwendet werden kann.

In bezug auf die UMTS-Protokollarchitektur unterhalb der RLC-Schicht ist die MAC-Schicht angeordnet, deren Dienstzugangspunkte für die RLC-Schicht logische Kanäle genannt werden. Die MAC-Schicht hat im wesentlichen die Aufgabe, die von der RLC-Schicht auf den verschiedenen Kanälen erhaltenen Datenpakete dynamisch auf die vorhandenen Transportkanäle zu verteilen. Als Transportkanal wird ein Dienstzugangspunkt der physikalischen Schicht bzw. Bit-Übertragungschicht gegenüber der MAC-Schicht bezeichnet.

Üblicherweise ist für jeden Transportkanal eine feste Codierung eingestellt, die für die Übertragungs-Fehlerrate für Datenpakete und auch für die erforderliche Bandbreite bei der Übertragung maßgeblich ist. Beispielsweise kann für einen Transportkanal eine Faltungscodierung mit der Rate 1/3 eingestellt sein, so daß die über die Luftschnittstelle übertragene Datenrate dreimal so hoch ist wie die von der RLC-Schicht an die MAC-Schicht übertragene Datenrate. Die Übertragungs-Fehlerrate bei einer Übertragung mit einer solchen Codierung ist weitaus geringer, als wenn eine Faltungscodierung mit der Rate 1/2 (Verdopplung der Datenrate) oder gar keine Codierung genutzt wird.

Herkömmlicherweise steht für die Übertragung von Datenpaketen von einem logischen Kanal ein einzelner Transportkanal zur Verfügung, so daß für jeden logischen Kanal ein Transportkanal und damit die feste Datencodierung des Transportkanals festgelegt ist. Es ist jedoch möglich, daß mehrere logische Kanäle denselben Transportkanal nutzen.

Nach dem Stand der Technik werden die Datenpakete somit vollständig über einen bestimmten Transportkanal übertragen, für den die Codierung fest eingestellt ist. Diese Codierung erhöht das pro Datenpaket zu übertragende Datenaufkommen, und zwar um so mehr, je besser die Fehlerbehebungsrate und damit je geringer die verbleibende Federrate nach der Decodierung, die in der Empfangseinrichtung vorgenommen wird, im vorliegendem Beispiel an dem Knoten des Mobilkommunikations-Netzwerkes, ist.

Nach der Übertragung werden die Kontrolldatenteile der Datenpakete entfernt, um die ursprünglichen Nutzdaten, wie Sprach-Datenströme, zurückzuerhalten.

Die oben erwähnte Komprimierung des Nutzdatenteils eines Datenpakets in der Sendeeinrichtung der Kommunikationsvorrichtung zur effizienteren Übertragung des Datenpakets über die Luftschnittstelle erfordert eine hohe Übertragungsdienstgüte, da fehlerhafte Übertragungen sich auf eine Vielzahl nachfolgender Datenpakete fortpflanzen können. Da Nutzdaten und Kontrolldaten mit derselben Codierung übertragen werden, ergibt sich, daß zur Übertragung eines Datenpakets eine erhebliche Bandbreite eines Transportkanals zur Verfügung stehen muß.

Aus dem Fachartikel "Blocking probabilities for inverse multiplexer in public switched digital Networks" Global Telecommunications Conference, 1995, Conference Record. Communication Theory mini-conference , GLOBECOM '95, IEE Singapore 13 - 17 Nov. 1995, New York, NY, USA IEEE US, 13. November 1995 (1995-11-13) Seiten 833-837 von Vu et al. ist eine Architektur für Festnetz-Telephonie bekannt, wobei auf einer Sende- und einer Empfangsseite jeweils ein inverser Multiplexer zum Einsatz kommt, um in geeigneter Weise durch Zusammenschalten von Nutzdatenkanälen eine gewünschte Übertragungsbandbreite bereitzustellen. Dabei findet eine Nutzdatenübertragung über mehrere Datenkanäle statt, während Kontrolldaten über mehrere Kontrollkanäle übermittelt werden.

Ausgehend hiervon liegt der Erfindung die Aufgabe zugrunde, eine Kommunikationsvorrichtung und ein Verfahren der eingangs genannten Art derart weiterzuentwickeln, daß Datenpakete, die einen Nutzdatenteil und einen Kontrolldatenteil umfassen, effizienter übertragen werden können.

Hinsichtlich der Kommunikationsvorrichtung wird die Aufgabe bei der eingangs genannten Kommunikationsvorrichtung dadurch gelöst, daß die Sendeeinrichtung eine Aufteilungseinrichtung zur Aufteilung eines zu übertragenden Datenpaketes vor der Übertragung in den Kontrolldatenteil und den Nutzdatenteil auf verschiedene Kanäle einer Übertragungseinrichtung aufweist, die einen Kanal für den Kontrolldatenteil und einen Kanal für den Nutzdatenteil aufweist, und die Empfangseinrichtung zum Zusammensetzen des Kontrolldatenteils und der Nutzdatenteils des Datenpakets ausgebildet ist.

Gegenüber der Kommunikationsvorrichtung nach dem Stand der Technik zeichnet sich die Kommunikationsvorrichtung gemäß der Erfindung unter anderen dadurch aus, daß eine Aufteilungseinrichtung an der Sendeeinrichtung vorhanden ist, die Datenpakete hinsichtlich ihres Nutzdatenteils und ihres Kontrolldatenteils aufteilt. Die Übertragung eines Datenpakets erfolgt dann über zwei Kanäle einer Übertragungseinrichtung. Dies bringt den Vorteil mit sich, daß hinsichtlich der Übertragung der Kontrolldatenteil von dem Nutzdatenteil unabhängig behandelt werden kann.

Beispielsweise kann es in vielen Fällen gegeben sein, daß die Codierung des Nutzdatenteils geringer sein muß als diejenige des Kontrolldatenteils. In diesem Fall kann zur Übertragung des Nutzdatenteils ein Kanal der Übertragungseinrichtung benutzt werden, dessen Codierung niedriger ist, als ein weiterer Kanal der Übertragungseinrichtung, der zur Übertragung des Kontrolldatenteils dient. Daher reicht beim letztgenannten Ausführungsbeispiel eine insgesamt geringere Bandbreite der Transportkanäle aus, um ein Datenpaket von der Sendeeinrichtung zu der Empfangseinrichtung zu übertragen.

Um das Datenpaket an der Empfangseinrichtung in seiner ursprünglichen Form, d. h. der Form vor Erreichen der Aufteilungseinrichtung, wiederzugewinnen, werden der Nutzdatenteil und der Kontrolldatenteil an der Empfangseinrichtung wieder zusammengesetzt.

Bevorzugt weisen die Kanäle der Übertragungseinrichtung eine unterschiedliche Übertragungsdienstgüte auf. Die jeweilige Übertragungsdienstgüte ist von Anwendungsfall zu Anwendungsfall an die jeweiligen Erfordernisse für die Übertragungsfehlerrate bei dem Kontrolldatenteil und dem Nutzdatenteil anzupassen.

Um einen Kontrolldatenteil und einen Nutzdatenteil, die zu einem Datenpaket gehören, an der Empfangseinrichtung wieder zusammenzusetzen, ist es vorteilhaft, daß die Sendeeinrichtung eine Generiereinrichtung zum Generieren einer Sequenznummer aufweist, die sowohl dem Kontrolldatenteil als auch dem Nutzdatenteil hinzugefügt wird. In der Empfangseinrichtung kann dann die Sequenznummer verwendet werden, um das erforderliche Zusammensetzen des Datenpakets zu bewerkstelligen. Es ist jedoch auch denkbar, daß ein Kontrolldatenteil und ein Nutzdatenteil, die zusammen gehören, in anderer Weise so verknüpft werden, daß ein Zusammensetzen des Datenpakets an der Empfangseinrichtung ermöglicht wird.

Es ist hervorzuheben, daß die erfindungsgemäße Kommunikationsvorrichtung generell eine verschiedene Übertragung des Nutzdatenteils und des Kontrolldatenteils eines Datenpakets ermöglicht. Bei einer Ausführungsform der Erfindung kann die Sendeeinrichtung eine Kompressionseinrichtung zum Komprimieren des Kontrolldatenteils vor der Übertragung des Datenpakets und die Empfangseinrichtung eine Dekompressionseinrichtung zum Dekomprimieren des Kontrolldatenteils nach der Übertragung des Datenpakets aufweisen. Im Hinblick auf zu komprimierende Kontrolldatenteile zur effizienteren Datenübertragung ergibt sich der Vorteil, daß komprimierte Kontrolldatenteile stärker gegen Übertragungsfehler geschützt werden können als zugehörige übertragene Nutzdaten. In diesem Fall wird auch Bandbreite für die Übertragung der Nutzdaten eingespart.

Die o. g. Aufgabe wird hinsichtlich des Verfahrens gelöst durch ein Verfahren zur Übertragung eines Datenpakets, das einen Kontrolldatenanteil und einen Nutzdatenanteil umfaßt, von einer Sendeeinrichtung, wie einem mobilen Endgerät (UE), zu einer Empfangseinrichtung, wie einer Netzwerksteuereinrichtung (RNC), über Kanäle eines Mobilkommunikationsnetzes, mit den Schritten:
a) Aufteilen des Datenpakets in den Kontrolldatenanteil und den Nutzdatenanteil in der Sendeeinrichtung,
b) Übertragen des Kontrolldatenteils und des Nutzdatenteils auf verschiedenen Kanälen zu der Empfangseinrichtung und
c) Zusammensetzen des Kontrolldatenteils und des Nutzdatenteils des Datenpakets in der Empfangseinrichtung.

Dieses Verfahren kann mit der vorstehend beschriebenen Vorrichtung durchgeführt werden.

Bevorzugt ist in Schritt b) die Übertragungsdienstgüte für den Kontrolldatenteil verschieden von der Übertragungsdienstgüte für den Nutzdatenteil. Wird bei der Durchführung des Verfahrens auf Einrichtungen mit der UMTS-Protokollarchitektur zurückgegriffen, die in einem mobilen Endgerät (UE) und einer Netzwerksteuereinrichtung (RNC) vorliegen kann, wird die Übertragungsdienstgüte beispielsweise über die Einstellung der Transportkanäle vorgenommen.

In Schritt a) des Verfahrens wird bevorzugt für das Datenpaket eine Sequenznummer generiert, die sowohl dem Kontrolldatenteil als auch dem Nutzdatenteil hinzugefügt wird, um das Datenpaket an der Empfangseinrichtung wieder zusammenzusetzen. Auch eine Komprimierung des Kontrolldatenteils vor der Übertragung in Schritt b) und eine Dekomprimierung des Kontrolldatenteils in der Empfangseinrichtung sind möglich.

Es wird darauf hingewiesen, daß selbstverständlich auch die Nutzdaten in komprimierter Form in Schritt b) übertragen werden können.

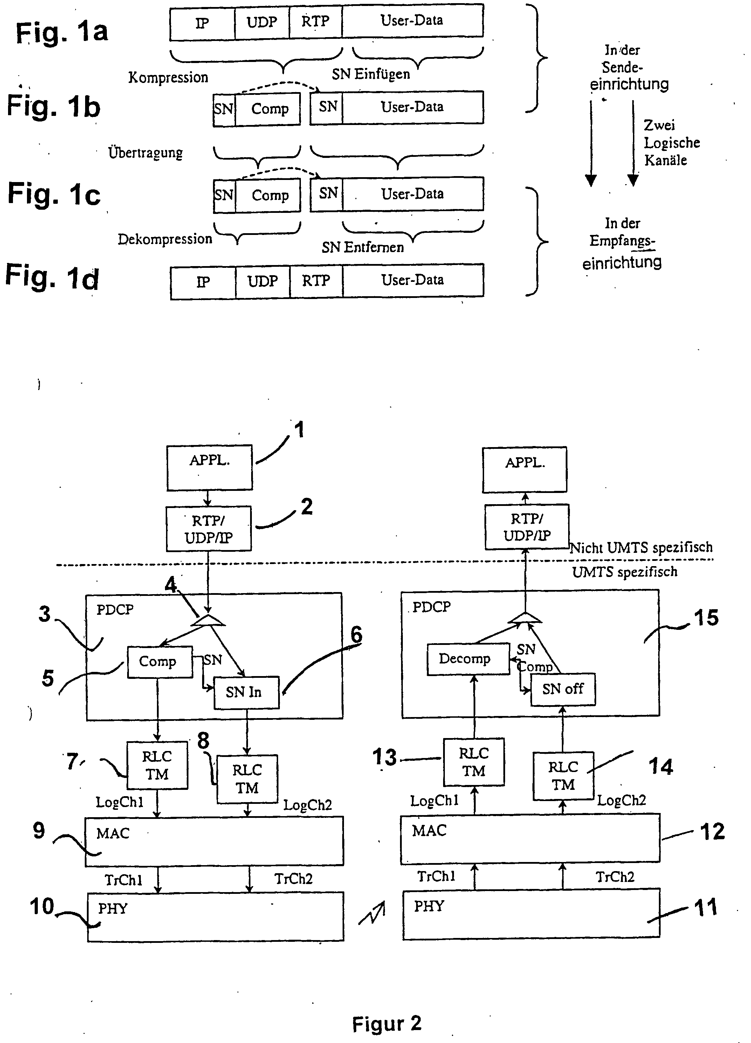

Die Erfindung wird nachfolgend anhand eines Ausführungsbeispiels unter Bezugnahme auf die Zeichnungen noch näher erläutert. Es zeigen:
Figuren 1A, 1B, 1C und 1D
   jeweils eine schematische Darstellung eines aus einem Kontrolldatenteil und einem Nutzdatenteil bestehenden Datenpakets in verschiedenen Stadien vor, während und nach einer Übertragung des Datenpakets von einer Sendeeinrichtung zu einer Empfangseinrichtung und
Figur 2
   eine Protokollarchitektur zur Verarbeitung des Datenpakets von Figur 1.

Als Beispiel wird die Übertragung von paketorientierten Daten einer Echtzeit-Applikation beschrieben. Es wird voraus gesetzt, daß die Applikation im regelmäßigen zeitlichen Abstand von 20 ms Datenpakete der Größe 160 Bit erzeugt. Die Applikation wird in einer Sendeeinrichtung (UE) ausgeführt und ist in Figur 2 mit der Bezugsziffer 1 bezeichnet. Die Sendeeinrichtung (UE) ist mit der UMTS-Protokollarchitektur ausgestattet.

Im nicht UMTS-spezifischen Bereich der Sendeeinrichtung werden einzelnen Datenpaketen Kontrolldatenköpfe des RTP-, UDP- und IP-Protokolls vorangestellt, da die Daten nach der Übertragung über die UMTS-Luftschnittstelle und das Mobilfunknetzwerk in das paketvermittelnde Internet bis zu einer Empfangseinrichtung geroutet werden müssen. Das Voranstellen der Kontrolldatenköpfe vollzieht sich in der Einrichtung 2. Die dabei entstehende Abfolge der Daten in einem Datenpaket ergibt sich aus Figur 1A, bei der der Kontrolldatenteil von den Kontrolldatenköpfen des RTP-, UDP-und IP-Protokolls gebildet wird. Auf den Kontrolldatenteil folgt der Nutzdatenteil.

Im Ablauf der Weiterführung des Datenpakets wird nunmehr in der Sendeeinrichtung der UMTS-spezifische Bereich erreicht. Datenpakete gemäß Figur 1A erreichen die PDCP-Schicht 3 der Sendeeinrichtung, und zwar zunächst eine Aufteilungseinrichtung 4, an der ein Datenpaket gemäß Figur 1A in seinen Nutzdatenteil und seinen Kontrolldatenteil getrennt wird.

Der Kontrolldatenteil gelangt zu einer Kompressionseinrichtung 5. Je nach Stadium der Kompression werden die eingehenden Kontrolldatenteile dabei auf 8 Bit, 16 Bit oder, beispielsweise am Anfang der Übertragung, 480 Bit komprimiert, wobei eine Sequenznummer SN generiert wird, die in den komprimierten Kontrolldatenteilen enthalten ist. Der Nutzdatenteil eines Datenpakets von 160 Bit wird nicht komprimiert.

Die in der Kompressionseinrichtung 5 erzeugte Sequenznummer SN wird einer Einrichtung 6 zugeleitet, welche die Sequenznummer SN den zu übertragenden Nutzdaten voranstellt. In dem Ausführungsbeispiel ist die Sequenznummer SN mit einigen Bit aufgefüllt, so daß die gesamte addierte Länge der Sequenznummer 8 Bit entspricht.

Von der PDCP-Schicht 3 aus wird der komprimierte Kontrolldatenteil einer zugeordneten RLC-Schicht 7 und der nicht komprimierte Nutzdatenteil einer zugeordneten RLC-Schicht 8 zugeleitet. Die RLC-Schichten 7, 8 werden beide im transparenten Modus betrieben und leiten die jeweiligen Daten einer MAC-Schicht 9 der UMTS-Protokollarchitektur zu. Die Zuleitung der Daten von den beiden RLC-Schichten 7, 8 zu der MAC-Schicht 9 geschieht über zwei gesonderte logische Kanäle LogCh1, LogCh2.

Die MAC-Schicht 9 bildet den logischen Kanal LogCh1 auf einen Transportkanal TrCh1 und den logischen Kanal LogCh2 auf einen Transportkanal TrCh2 ab. Der Transportkanal TrCh1, der den Nutzdatenteilen von Datenpaketen zugeordnet ist, ist so konfiguriert, daß in jedem Übertragungsintervall der Länge 20 ms entweder 0, 8, 16 oder 480 Bit übertragen werden können, wobei auf die zu übertragenden Kontrolldatenteile eine Codierung mit der Rate 1/3 angewendet wird. In jedem Übertragungsintervall wird ein einzelner Kontrolldatenteil über den Transportkanal TrCh1 übertragen.

Der Transportkanal TrCh2, der dem Nutzdatenteil eines Datenpakets zugeordnet ist, ist so konfiguriert, daß in jedem Übertragungsintervall der Länge 20 ms entweder 0 oder 168 Bit übertragen werden, wobei auf die zu übertragenden Daten eine Codierung der Rate 1/2 angewendet wird. Es werden somit über den Transportkanal TrCh2 in einem bestimmten Übertragungsintervall entweder keine Daten oder 160 Bit Nutzdaten mit 8 Bit vorangestellter Sequenznummer SN übertragen.

Die Übertragung der Kontrolldaten- und Nutzdatenteile vollzieht sich über die physikalischen Kanäle der physikalischen Schicht der UMTS-Protokollarchitektur.

Die zu übertragenden Daten erreichen an der Empfangseinrichtung zunächst ihre physikalische Schicht 11. Von der physikalischen Schicht der Empfangseinrichtung 11 aus erreicht ein Nutzdatenteil und ein Kontrolldatenteil unter Zwischenschaltung der MAC-Schicht 12 und zwei RLC-Schichten 13, 14 die PDCP-Schicht 15 der Empfangseinrichtung. Auch die Empfangseinrichtung ist mit der UMTS-Protokollarchitektur ausgestattet.

Die PDCP-Schicht 15 identifiziert nun die Nutzdaten- und Kontrolldatenteile mit gleicher Sequenznummer SN als zusammengehörig und dekomprimiert die Kontrolldatenteile und entfernt die ersten 8 Bit aus dem Nutzdatenteil. Anschließend werden die dekomprimierten Kontrolldatenteile und die Nutzdatenteile zu dem ursprünglichen Datenpaket zusammengefügt, welches abschließend an die höheren, im vorliegenden Ausführungsbeispiel nicht mehr UMTS-spezifischen Schichten, wie IP, UDP, RTP und eine Applikation zur weiteren Verarbeitung gegeben wird.

Ein Datenpaket nimmt somit ab Verlassen der PDCP-Schicht 3 der Sendeeinrichtung die Form der Daten in Figur 1B an und behält sie während der Übertragung bei, und zwar bis zum Erreichen der PDCP-Schicht 15 der Empfangseinrichtung. Die Figur 1C zeigt die Daten vor Erreichen der PDCP-Schicht 15 der Empfangseinrichtung. Nach Verlassen der PDCP-Schicht 15 der Empfangseinrichtung nehmen die Daten die Form der Figur 1D an, die mit derjenigen der Figur 1A übereinstimmt.

Die Einsparung an Bandbreite, die von dieser Erfindung bereitgestellt werden kann, kann wie folgt überschlagen werden:

Es wird angenommen, daß die Kontrolldatenteile laufend mit einer durchschnittlichen komprimierten Kontrolldatenlänge von 16 Bit komprimiert werden, der Nutzdatenteil mit einer codierten Rate 1/2 ausreichend geschützt ist und die komprimierten Kontrolldatenteile eine Codierungsrate von 1/3 benötigen. Sich ergebende Bandbreiten-Eckwerte des Standes der Technik und der Vorrichtung nach der Erfindung ergeben sich aus der nachfolgenden Tabelle:

| | **Stand der Technik** | **Erfindungsgemäß** |
|---|---|---|
| **vor Codierung** | | |
| Kontrolldatenteil | 16 Bit | 16 Bit |
| Nutzdatenteil | 160 Bit | 168 Bit |
| Summe | 176 Bit | |
| Codierungsrate | 1/3 | 1/3 bzw. 1/2 |

| **nach Codierung** | | |
|---|---|---|
| Kontrolldatenteil | 48 Bit | 48 Bit |
| Nutzdatenteil | 480 Bit | 336 Bit |
| Summe | 528 Bit | 384 Bit |
| Übertragungsintervall | 20 ms | 20 ms |
| Übertragungsdatenrate | **26.400 Bit/s** | **19.200 Bit/s** |

Bei diesem Beispiel wird somit die Übertragungsdatenrate von 26.400 Bit/s auf 19.200 Bit/s vermindert und somit erhebliche Bandbreite der Transportkanäle eingespart.

## Patentansprüche

1. Kommunikationsvorrichtung mit einer Sendeeinrichtung, wie einem mobilen Endgerät, und einer Empfangseinrichtung, wie einer Netzwerksteuereinrichtung, die über Kanäle eines Mobilkommunikationsnetzes miteinander verknüpft sind, zur Übertragung von Datenpaketen zwischen der Sendeeinrichtung und der Empfangseinrichtung, die einen Kontrolldatenteil und einen Nutzdatenteil umfassen,
**dadurch gekennzeichnet,**
**daß** die Sendeeinrichtung eine Aufteilungseinrichtung (4) zur Aufteilung eines zu übertragenden Datenpakets vor der Übertragung in den Kontrolldatenteil und den Nutzdatenteil auf verschiedene Kanäle einer Übertragungseinrichtung (9, 10) aufweist, die einen Kanal für den Kontrolldatenteil und einen Kanal für den Nutzdatenteil aufweist, und die Empfangseinrichtung zum Zusammensetzen des Kontrolldatenteils und des Nutzdatenteils des Datenpakets ausgebildet ist.

2. Vorrichtung nach einem Anspruch 1,
**dadurch gekennzeichnet,**
**daß** die Kanäle eine unterschiedliche Übertragungsdienstgüte aufweisen.

3. Vorrichtung nach Anspruch 1 oder 2,
**dadurch gekennzeichnet,**
**daß** die Sendeeinrichtung eine Generiereinrichtung zum Generieren einer Sequenznummer (SN) aufweist, die sowohl dem Kontrolldatenteil als auch dem Nutzdatenteil hinzugefügt wird.

4. Vorrichtung nach einem der Ansprüche 1 bis 3,
**dadurch gekennzeichnet,**
**daß** die Sendeeinrichtung eine Kompressionseinrichtung (5) zum Komprimieren des Kontrolldatenteils vor der Übertragung des Datentpakets und die Empfangseinrichtung eine Dekompressionseinrichtung zum Dekomprimieren des Kontrolldatenteils nach der Übertragung des Datentpakets aufweist.

5. Vorrichtung nach einem der Ansprüche 1 bis 4,
**dadurch gekennzeichnet,**
**daß** die Sendeeinrichtung und die Empfangseinrichtung jeweils mit der UMTS-Protokollarchitektur ausgestattet sind.

6. Vorrichtung nach Anspruch 5,
**dadurch gekennzeichnet,**
**daß** die Aufteilungseinrichtung in einer PDCP-Schicht (3) der UMTS-Protokollarchitektur der Sendeeinrichtung enthalten ist.

7. Vorrichtung nach Anspruch 5,
**dadurch gekennzeichnet,**
**daß** die verschiedenen Kanäle der Übertragungseinrichtung (9, 10) von zwischen einer RLC-Schicht (7, 8), die der PDCP-Schicht (3) zugeordnet ist, und einer MAC-Schicht (a) vorgesehenen, verschiedenen logischen Kanälen und zwischen der MAC-Schicht (4) und der physikalischen Schicht (10) vorgesehenen, verschiedenen Transportkanälen gebildet sind.

8. Vorrichtung nach Anspruch 5, soweit abhängig von Anspruch 3,
**dadurch gekennzeichnet,**
**daß** die Generiereinrichtung in einer PDCP-Schicht (3) der Sendeeinrichtung enthalten ist.

9. Vorrichtung nach Anspruch 5, soweit abhängig von Anspruch 4,
**dadurch gekennzeichnet,**
**daß** die Kompressionseinrichtung (5) in einer PDCP-Schicht (3) der Sendeeinrichtung und die Dekompressionsreinrichtung in einer PDCP-Schicht (15) der Empfangseinrichtung enthalten ist.

10. Verfahren zur Übertragung eines Datenpakets, das einen Kontrolldatenanteil und einen Nutzdatenanteil umfaßt, von einer Sendeeinrichtung, wie einem mobilen Endgerät, zu einer Empfangseinrichtung, wie einer Netzwerksteuereinrichtung, über Kanäle eines Mobilkommunikationsnetzes, mit den Schritten:
a) Aufteilen des Datenpakets in den Kontrolldatenanteil und den Nutzdatenanteil in der Sendeeinrichtung,
b) Übertragen des Kontrolldatenteils und des Nutzdatenteils auf verschiedenen Kanälen zu der Empfangseinrichtung und
c) Zusammensetzen des Kontrolldatenteils und des Nutzdatenteils des Datenpakets in der Empfangseinrichtung.

11. Verfahren nach Einspruch 10,
bei dem in Schritt b) die Übertragungsdienstgüte für den Kontrolldatenteil verschieden von der Übertragungsdienstgüte für den Nutzdatenteil ist.

12. Verfahren nach Anspruch 10 oder 11,
bei dem in Schritt a) für das Datenpaket eine Sequenznummer generiert wird, die sowohl dem Kontrolldatenteil als auch dem Nutzdatenteil hinzugefügt wird.

13. Verfahren nach einem der Ansprüche 10 bis 12,
bei dem vor Schritt b) in der Sendeeinrichtung der Kontrolldatenteil komprimiert und nach Schritt b) in der Empfangseinrichtung der Kontrolldatenteil dekomprimiert wird.

14. Verfahren nach einem der Ansprüche 10 bis 13,
**dadurch gekennzeichnet,**
**daß** die Sendeeinrichtung und die Empfangseinrichtung jeweils mit der UMTS-Protokollarchitektur ausgestattet sind.

15. Verfahren nach Anspruch 14,
**dadurch gekennzeichnet,**
**daß** Schritt a) in einer PDCP-Schicht der UMTS-Protokollarchitektur der Sendeeinrichtung durchgeführt wird.

## Claims

1. Communications apparatus having a transmission device, such as a mobile terminal, and a reception device, such as a network control device, which are linked to one another via channels in a mobile communications network, for transmitting data packets between the transmission device and the reception device which comprise a control data part and a user data part,
**characterized**
**in that** the transmission device has a splitting device (4) for splitting a data packet which is to be transmitted, before transmission, into the control data part and the user data part over various channels of a transmission device (9, 10) which has a channel for the control data part and a channel for the user data part, and the reception device is designed to assemble the control data part and the user data part of the data packet.

2. Apparatus according to Claim 1,
**characterized**
**in that** the channels have different transmission qualities of service.

3. Apparatus according to Claim 1 or 2,
**characterized**
**in that** the transmission device has a generating device for generating a sequence number (SN) which is added both to the control data part and to the user data part.

4. Apparatus according to one of Claims 1 to 3,
**characterized**
**in that** the transmission device has a compression device (5) for compressing the control data part before the data packet is transmitted, and the reception device has a decompression device for decompressing the control data part after the data packet has been transmitted.

5. Apparatus according to one of Claims 1 to 4,
**characterized**
**in that** the transmission device and the reception device are each equipped with the UMTS protocol architecture.

6. Apparatus according to Claim 5,
**characterized**
**in that** the splitting device is contained in a PDCP layer (3) in the transmission device's UMTS protocol architecture.

7. Apparatus according to Claim 5,
**characterized**
**in that** the various channels of the transmission device (9, 10) are formed by various logical channels provided between an RLC layer (7, 8), which is associated with the PDCP layer (3), and an MAC layer (a), and by various transport channels provided between the MAC layer (4) and the physical layer (10).

8. Apparatus according to Claim 5, in so far as it is dependent on Claim 3,
**characterized**
**in that** the generating device is contained in a PDCP layer (3) in the transmission device.

9. Apparatus according to Claim 5, in so far as it is dependent on Claim 4,
**characterized**
**in that** the compression device (5) is contained in a PDCP layer (3) in the transmission device, and the decompression device is contained in a PDCP layer (15) in the reception device.

10. Method for transmitting a data packet which comprises a control data component and a user data component from a transmission device, such as a mobile terminal , to a reception device, such as a network control device, via channels in a mobile communications network, having the following steps:
a) the data packet is split into the control data component and the user data component in the transmission device,
b) the control data part and the user data part are transmitted to the reception device on different channels, and
c) the control data part and the user data part of the data packet are assembled in the reception device.

11. Method according to Claim 10,
in which, in step b), the transmission quality of service for the control data part is different than the transmission quality of service for the user data part.

12. Method according to Claim 10 or 11,
in which, in step a), the data packet has a sequence number generated for it which is added both to the control data part and to the user data part.

13. Method according to one of Claims 10 to 12,
in which, before step b), the control data part is compressed in the transmission device, and, after step b), the control data part is decompressed in the reception device.

14. Method according to one of Claims 10 to 13,
**characterized**
**in that** the transmission device and the reception device are each equipped with the UMTS protocol architecture.

15. Method according to Claim 14,
**characterized**
**in that** step a) is carried out in a PDCP layer in the transmission device's UMTS protocol architecture.

## Revendications

1. Dispositif de communication avec un dispositif d'émission, par exemple un terminal mobile, et avec un dispositif de réception, par exemple un dispositif de commande de réseau, qui sont reliés entre eux par l'intermédiaire de canaux d'un réseau de communication mobile, pour la transmission de paquets de données entre le dispositif d'émission et le dispositif de réception, lesquels paquets de données comprennent une partie de données de contrôle et une partie de données utiles,
**caractérisé par le fait que**
le dispositif d'émission comporte un dispositif de division (4) pour diviser avant la transmission un paquet de données à transmettre en partie de données de contrôle et partie de données utiles sur différents canaux d'un dispositif de transmission (9, 10) qui comporte un canal pour la partie de données de contrôle et un canal pour la partie de données utiles et le dispositif de réception est conçu pour la réunion de la partie de données de contrôle et de la partie de données utiles du paquet de données.

2. Dispositif selon la revendication 1,
**caractérisé par le fait que**
les canaux ont une qualité de service de transmission différente.

3. Dispositif selon l'une des revendications 1 ou 2,
**caractérisé par le fait que**
le dispositif d'émission comporte un dispositif de production pour la production d'un numéro de séquence (SN) qui est adjoint aussi bien à la partie de données de contrôle qu'à la partie de données utiles.

4. Dispositif selon l'une des revendications 1 à 3,
**caractérisé par le fait que**
le dispositif d'émission comporte un dispositif de compression (5) pour la compression de la partie de données de contrôle avant la transmission du paquet de données et que le dispositif de réception comporte un dispositif de décompression pour la décompression de la partie de données de contrôle après la transmission du paquet de données.

5. Dispositif selon l'une des revendications 1 à 4,
**caractérisé par le fait que**
le dispositif d'émission et le dispositif de réception sont munis chacun de l'architecture de protocole UMTS.

6. Dispositif selon la revendication 5,
**caractérisé par le fait que**
le dispositif de division est contenu dans une couche PDCP (3) de l'architecture de protocole UMTS du dispositif d'émission.

7. Dispositif selon la revendication 5,
**caractérisé par le fait que**
les différents canaux du dispositif de transmission (9, 10) sont formés par différents canaux logiques prévus entre une couche RLC (7, 8), qui est associée à la couche PDCP (3), et une couche MAC (a) et par différents canaux de transport prévus entre la couche MAC (4) et la couche physique (10).

8. Dispositif selon la revendication 5, dans la mesure où elle est dépendante de la revendication 3,
**caractérisé par le fait que**
le dispositif de production est contenu dans une couche PDCP (3) du dispositif d'émission.

9. Dispositif selon la revendication 5, dans la mesure où elle est dépendante de la revendication 4,
**caractérisé par le fait que**
le dispositif de compression (5) est contenu dans une couche PDCP (3) du dispositif d'émission et que le dispositif de décompression est contenu dans une couche PDCP (15) du dispositif de réception.

10. Procédé pour la transmission d'un paquet de données, qui comprend une partie de données de contrôle et une partie de données utiles, d'un dispositif d'émission, par exemple un terminal mobile, à un dispositif de réception, par exemple un dispositif de commande de réseau, par l'intermédiaire de canaux d'un réseau de communication mobile, avec les étapes :
a) division du paquet de données en partie de données de contrôle et partie de données utiles dans le dispositif d'émission,
b) transmission de la partie de données de contrôle et de la partie de données utiles sur différents canaux vers le dispositif de réception, et
c) réunion de la partie de données de contrôle et de la partie de données utiles du paquet de données dans le dispositif de réception.

11. Procédé selon la revendication 10,
dans lequel, à l'étape b), la qualité de service de transmission pour la partie de données de contrôle est différente de la qualité de service de transmission pour la partie de données utiles.

12. Procédé selon la revendication 10 ou 11,
dans lequel, à l'étape a), on produit pour le paquet de données un numéro de séquence qui est adjoint aussi bien à la partie de données de contrôle qu'à la partie de données utiles.

13. Procédé selon l'une des revendications 10 à 12,
dans lequel, avant l'étape b), on comprime la partie de données de contrôle dans le dispositif d'émission et, après l'étape b), on décomprime la partie de données de contrôle dans le dispositif de réception.

14. Procédé selon l'une des revendications 10 à 13,
**caractérisé par le fait que**
le dispositif d'émission et le dispositif de réception sont munis chacun de l'architecture de protocole UMTS.

15. Procédé selon la revendication 14,
**caractérisé par le fait que**
l'étape a) est effectuée dans une couche PDCP de l'architecture de protocole UMTS du dispositif d'émission.
